# EUROPEAN PATENT APPLICATION

(11) **EP 2 747 502 A1**
(43) Date of publication of application: **25.06.2014**
(21) Application number: 12824627.9
(22) Date of filing: 19.06.2012
(51) Int. Cl.: H04W 72/04

(54) **COMMUNICATION SYSTEM, BASE STATION DEVICE, MOBILE TERMINAL DEVICE AND COMMUNICATION METHOD**

(30) Priority: 15.08.2011 JP 2011177603
(71) Applicant: NTT DOCOMO, INC., Chiyoda-ku Tokyo 100-6150 (JP)
(72) Inventor: TAKEDA, Kazuaki, Tokyo 100-6150 (JP); ABE, Tetsushi, Tokyo 100-6150 (JP); SAGAE, Yuta, Tokyo 100-6150 (JP); MIKI, Nobuhiko, Tokyo 100-6150 (JP)
(74) Representative: HOFFMANN EITLE
(86) International application number: PCT/JP2012/065624
(87) International publication number: WO 2013/024623

(57) **Abstract**

The present invention is designed to use frequency resources effectively, even in the situation where a plurality of mobile terminal apparatuses of varying capabilities coexist. A communication system, in which a mobile terminal apparatus (10) and a base station apparatus (20) communicate using a basic carrier and an extended carrier that is additionally allocated to the basic carrier, in which: the base station apparatus has a setting section (310) that sets, in the extended carrier, a subframe of a first carrier type which can be received in each of a plurality of mobile terminal apparatuses of varying capabilities and a subframe of a second carrier type which can be received in part of the plurality of mobile terminal apparatuses, and a transmission section (203) that transmits the basic carrier and the extended carrier to the mobile terminal apparatus, and the mobile terminal apparatus has a receiving section (103) that receives the basic carrier and the extended carrier from the base station apparatus.

## Description

### Technical Field

The present invention relates to a base station apparatus, a mobile terminal apparatus, a communication system and a communication method in a next-generation mobile communication system.

### Background Art

In the UMTS (Universal Mobile Telecommunication System) network, for the purposes of further increasing high-speed data rates, providing low delay and so on, long-term evolution (LTE) has been under study (non-patent literature 1). As multiple-access schemes, LTE uses a scheme that is based on OFDMA (Orthogonal Frequency Division Multiple Access) on downlink channels (downlink) and uses a scheme that is based on SC-FDMA (Single Carrier Frequency Division Multiple Access) on uplink channels (uplink).

Also, successor systems of LTE (referred to as, for example, "LTE-Advanced" or "LTE enhancement" (hereinafter referred to as "LTE-A")) are under study for the purposes of further broadbandization and increased speed. In LTE-A (Rel-10), carrier aggregation, which groups a plurality of component carriers (CCs), where the system band of the LTE system is one unit, for broadbandization, is used. Also, in LTE-A, a HetNet (Heterogeneous Network) configuration to use an interference coordination technique (eICIC: enhanced Inter-Cell Interference Coordination) is under study.

### Citation List

### Non-Patent Literature

Non-Patent Literature 1: 3GPP TR 25. 913 "Requirements for Evolved UTRA and Evolved UTRAN"

### Summary of the Invention

### Technical Problem

Now, with future systems (Rel-11 and later versions), carrier aggregation to take into account improvement of spectral efficiency and reduction of interference caused in the HetNet is anticipated. To realize these, it is effective to define a new carrier that supports mobile terminal apparatuses of Rel-11 and later versions. However, in the situation where there are many mobile terminal apparatuses of Rel-10 and earlier versions that do not support the new carrier in the system, there is a problem that this new carrier cannot be used effectively.

The present invention has been made in view of the above, and it is therefore an object of the present invention to provide a communication system, a base station apparatus, a mobile terminal apparatus and a communication method which makes it possible use frequency resources effectively even in the situation where a plurality of mobile terminal apparatuses of varying capabilities coexist.

### Solution to Problem

A communication system according to the present invention is a communication system in which a mobile terminal apparatus and a base station apparatus communicate using a basic carrier and an extended carrier that is additionally allocated to the basic carrier, and, in this communication system: the base station apparatus has: a setting section that sets, in the extended carrier, a subframe of a first carrier type which can be received in each of a plurality of mobile terminal apparatuses of varying capabilities and a subframe of a second carrier type which can be received in part of the plurality of mobile terminal apparatuses; and a transmission section that transmits the basic carrier and the extended carrier to the mobile terminal apparatus; and the mobile terminal apparatus has: a receiving section that receives the basic carrier and the extended carrier from the base station apparatus.

### Technical Advantage of the Invention

According to the present invention, it is possible to set, in an extended carrier, subframes of the first carrier type, which is supported by mobile terminal apparatuses of varying capabilities, in addition to subframes of a second carrier type, which is supported only by part of the mobile terminal apparatuses. Consequently, it is possible to allow mobile terminal apparatuses that do not support the second carrier type to utilize the extended carrier, so that it is possible to use frequency resources effectively even in the situation where a plurality of mobile terminal apparatuses of varying capabilities coexist.

### Brief Description of the Drawings

FIG. 1 is a diagram to explain a system band in an LTE-A system;
FIG. 2 is a diagram to explain carrier types;
FIG. 3 provides diagrams to show examples of a system configuration utilizing an additional carrier type;
FIG. 4 provides diagrams to explain subframe configurations of a base station apparatus;
FIG. 5 provides diagrams to explain methods of signaling the carrier type of each subframe;
FIG. 6 is a diagram to explain a system configuration of a radio communication system;
FIG. 7 is a diagram to explain an overall configuration of a base station apparatus;
FIG. 8 is a diagram to explain an overall configuration of a mobile terminal apparatus;
FIG. 9 is a functional block diagram of a baseband signal processing section provided in a base station apparatus and part of higher layers; and
FIG. 10 is a functional block diagram of a baseband signal processing section provided in a mobile terminal apparatus.

### Description of Embodiments

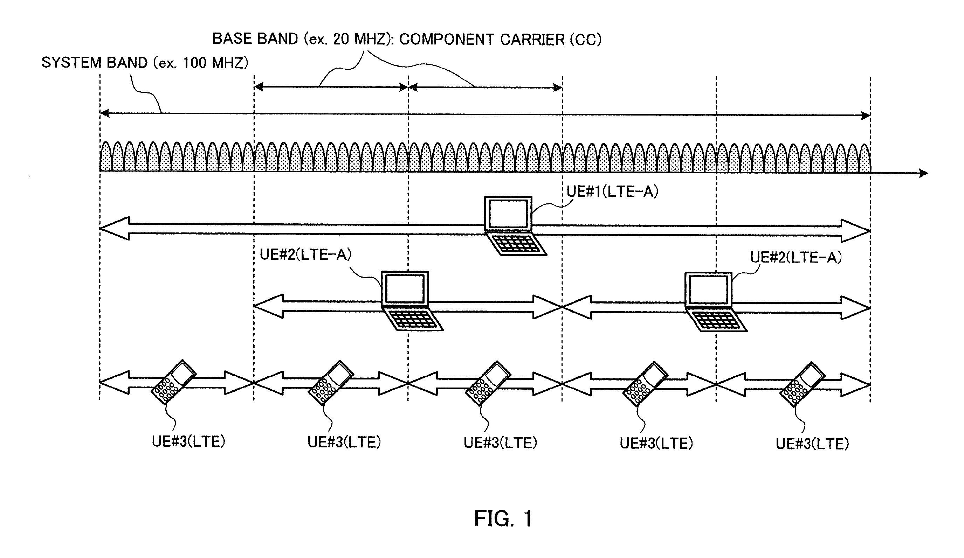

FIG. 1 is a diagram to show a layered bandwidth configuration defined in LTE-A. The example shown in FIG. 1 illustrates a layered bandwidth configuration where an LTE-A system, which has the first system band that is formed with a plurality of fundamental frequency blocks (hereinafter referred to as "component carriers"), and an LTE system, which has a second system band that is formed with one component carrier, coexist. In the LTE-A system, for example, radio communication is performed in a variable system bandwidth of 100 MHz or below, and, in the LTE system, for example, radio communication is performed in a variable system bandwidth of 20 MHz or below. The system band of the LTE-A system includes at least one component carrier, where the system band of the LTE system is one unit. Widening the band by way of aggregating a plurality of component carriers in this way is referred to as "carrier aggregation."

For example, in FIG. 1, the system band of the LTE-A system is a system band to include bands of five component carriers (20 MHz×5=100 MHz), where the system band (base band: 20 MHz) of the LTE system is one component carrier. In FIG. 1, mobile terminal apparatus UE (User Equipment) #1 is a mobile terminal apparatus to support the LTE-A system (and also support the LTE system), and is able to support a system band up to 100 MHz. UE #2 is a mobile terminal apparatus to support the LTE-A system (and also support the LTE system), and is able to support a system band up to 40 MHz (20 MHz×2=40 MHz). UE #3 is a mobile terminal apparatus to support the LTE system (and not support the LTE-A system), and is able to support a system band up to 20 MHz (base band).

In future systems (Rel-11 and later versions), extension of carrier aggregation, for specific use with respect to a HetNet, is anticipated. In this case, it is effective to introduce a carrier that has no compatibility with existing component carriers in carrier aggregation. A carrier that has no compatibility with existing component carriers refers to a carrier where an additional carrier type, which is not supported by the models (capabilities) of existing mobile terminal apparatuses, is set.

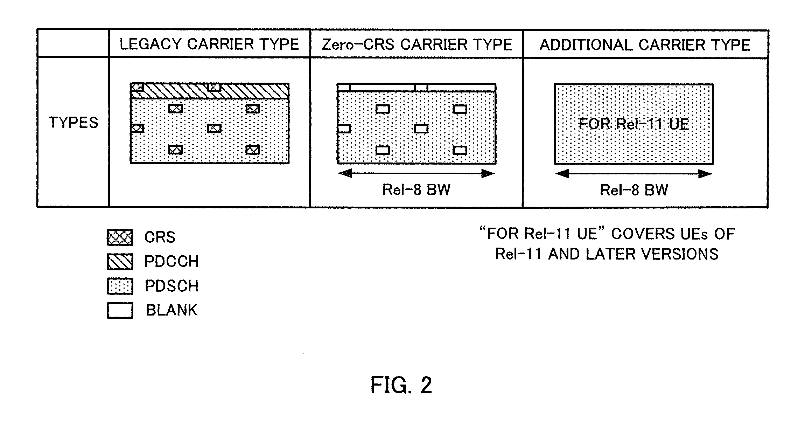

FIG. 2 is a diagram to explain carrier types. In FIG. 2, the left part on the sheet shows a legacy carrier type (the first carrier type), the center part on the sheet shows a zero-CRS carrier type, and the right part on the sheet shows an additional carrier type (the second carrier type). Note that FIG. 2 only shows a CRS (Cell-specific Reference Signal), a PDCCH (Physical Downlink Control Channel), and a PDSCH (Physical Downlink Shared Channel) for ease of explanation.

As shown in FIG. 2, in the legacy carrier type, the PDCCH is set over three symbols from the top of one resource block defined in LTE. Also, in the legacy carrier type, in one resource block, the CRS is set not to overlap user data and other reference signals such as the DM-RS (Demodulation - Reference Signal). This CRS is used to demodulate user data, and, besides, used to measure downlink channel quality (CQI: Channel Quality Indicator) for scheduling and adaptive control, and used to measure an average downlink propagation path state for cell search and handover (mobility measurement). The legacy carrier type is supported by existing (Rel-10 and earlier versions) and new (Rel-11 and later versions) mobile terminal apparatus UEs.

In the zero-CRS carrier type, blanks are set in resources for the PDCCH and the CRS. The blank resources are set by, for example, making transmission power 0. This zero-CRS carrier type can be realized not only by using the functions of new (Rel-11 and later versions) mobile terminal apparatus UEs, but can also be realized by using the functions of Rel-10 mobile terminal apparatus UEs. However, it may be possible that Rel-10 mobile terminal apparatus UEs are unable to establish synchronization in aggregation (inter-band CA), in which a plurality of carriers are separate in the frequency direction, and therefore may have difficulty supporting carrier aggregation that uses the zero-CRS carrier type. Consequently, when used with respect to carriers that are separate in the frequency direction, the zero-CRS carrier type is included in the additional carrier type, which is not supported by Rel-10. Also, with the zero-CRS carrier type, it is possible to apply the same rate matching as for the legacy carrier type, by fixing the number of PDCCH symbols.

Meanwhile, in the additional carrier type, user data is allocated to resources for the PDCCH and the CRS. This additional carrier type is not supported by existing (Rel-10 and earlier versions) mobile terminal apparatuses, and is supported only by new (Rel-11 and later versions) mobile terminal apparatus UEs. Also, the additional carrier type can be made not transmit downlink control channels (PHICH and PCFICH) and not transmit broadcast information (PBCH, Rel-8 SIB and Paging). In this case, with the additional carrier type, it is possible to allocate user data to resources for the control channels and broadcast information. Also, with the additional carrier type, user data is also allocated to resources for control information and the CRS as well, and therefore it is not possible to apply the same rate matching as for the legacy carrier type. Also, the additional carrier type is presumed to be used primarily in SCell (Secondary Cell).

The additional carrier type makes the CRS not subject to transmission, so that, for example, the DM-RS is used for data demodulation, and the CSI-RS (Channel State Information - Reference Signal) is used for CSI measurement. Also, with the additional carrier type, it is equally possible to transmit the FDM-type PDCCH when the PDCCH is made not subject to transmission. The FDM-type PDCCH uses a predetermined frequency band of the PDSCH region for downlink data signals as an enhanced PDCCH region. The FDM-type PDCCH allocated to this enhanced PDCCH region is demodulated using the DM-RS. Note that the enhanced PDCCH may be referred to as "UE-PDCCH".

When, with the additional carrier type, the PDCCH is made not subject to transmission, it is also possible to utilize cross-carrier scheduling. Cross-carrier scheduling refers to the method of transmitting a downlink control channel for a local carrier by a different carrier. For example, instead of transmitting a downlink control channel using a carrier of the additional carrier type, the downlink control channel may be transmitted by a carrier of the legacy carrier type.

When the additional carrier type makes the PHICH (Physical Hybrid-ARQ Indicator Channel) not subject to transmission, it is equally possible to perform retransmission control by downlink control information (DCI). When the additional carrier type makes the PCFICH (Physical Control Format Indicator Channel) not subject to transmission, it is equally possible to report the number of OFDM symbols to use for the PDCCH by higher layer signaling. When the additional carrier type makes broadcast information not subject to transmission, it is equally possible to transmit the broadcast information from a carrier of the legacy carrier type.

Note that, although an example to make the CRS, a downlink control channel and broadcast information not subject to transmission has been shown as the additional carrier type according to the present embodiment, this configuration is by no means limiting. It is only necessary that the additional carrier type have compatibility with new (Rel-11 and later versions) mobile terminal apparatus UEs and have no compatibility with existing (Rel-10 and earlier versions) mobile terminal apparatus UEs. For example, as the additional carrier type, it is equally possible to provide a configuration to make at least one of the CRS, a downlink control channel and broadcast information not subject to transmission. Also, the bandwidth of the additional carrier type does not have to use the system band (base band: 20 MHz) of the LTE system as one unit, and can be changed as appropriate.

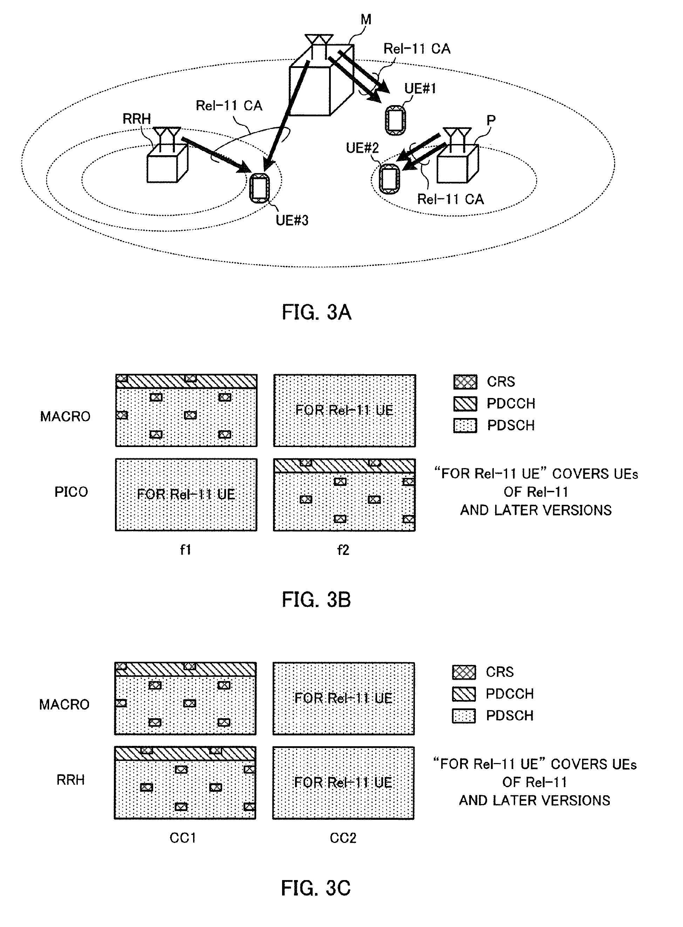

A system configuration to utilize the additional carrier type will be described with reference to FIG. 3. FIG. 3 provides diagrams to show examples of a system configuration to utilize the additional carrier type. Note that the mobile terminal apparatuses of FIG. 3 are new models (Rel-11 and later versions).

The system shown in FIG. 3A is configured in layers by a macro base station apparatus M (macro eNodeB), and a pico base station apparatus P (pico eNodeB) and a micro base station apparatus RRH (Remote Radio Head). In the cell of the macro base station apparatus M, micro cells are formed in a local fashion by the pico base station apparatus P and the micro base station apparatus RRH. Mobile terminal apparatus UE #1 is connected to the macro base station apparatus M, and mobile terminal apparatus UE #2 is connected to pico base station apparatus P. Mobile terminal apparatus UE #3 is connected to the macro base station apparatus M and the micro base station apparatus RRH. Mobile terminal apparatuses UE #1 to UE #3 each communicate with a base station apparatus by means of carrier aggregation.

Mobile terminal apparatus UE #2 is located in the cell of the pico base station apparatus P, where the received power from the pico base station apparatus P is greater than the received power from the macro base station apparatus M. Consequently, in mobile terminal apparatus UE #2, interference from the downlink data of the macro base station apparatus M against the downlink data of the pico base station apparatus P is not a problem. However, from the macro base station apparatus M, the CRS is transmitted over the entire cell of the macro base station apparatus M, and therefore interference by this CRS against the downlink data of the pico base station apparatus P is a problem.

With the present system, as shown in FIG. 3B, the macro base station apparatus M reduces interference by the CRS by performing carrier aggregation using the legacy carrier type and the additional carrier type. That is to say, since the additional carrier type makes the CRS not subject to transmission, the interference caused by the CRS against the downlink data of the pico base station apparatus P is reduced and transmission quality is therefore improved. Note that the additional carrier type has only to be a carrier type to make the CRS not subject to transmission. Also, by providing a configuration to transmit downlink data in resources for the CRS and the PDCCH, it is possible to improve spectral efficiency.

Mobile terminal apparatus UE #3 is able to execute carrier aggregation using the additional carrier type, between mobile terminal apparatus UE #3 and the micro base station apparatus RRH, while being connected with the macro base station M, by reducing the transmission power of the additional carrier type from the macro base station M or by stopping the additional carrier type from the macro base station M.

For example, as shown in FIG. 3C, mobile terminal apparatus UE #3 receives the PDCCH and the CRS from the macro base station apparatus M with downlink data, by a component carrier CC 1 of the legacy carrier type. Also, mobile terminal apparatus UE #3 receives downlink data from the micro base station apparatus RRH by a component carrier CC 2 of the additional carrier type. Note that, by providing a configuration to transmit downlink data in resources for the CRS and the PDCCH, as the additional carrier type, it is possible to improve spectral efficiency.

As mentioned earlier, the additional carrier type defined in this way does not have compatibility with existing (Rel-10 and earlier versions) mobile terminal apparatuses, which support only the legacy carrier type. Consequently, when carrier aggregation is executed by adding an extended carrier to the basic carrier, Rel-10 mobile terminal apparatuses are unable to use the extended carrier of the additional carrier type as SCell. In particular, in carrier aggregation (inter-band CA) in which the basic carrier and an extended carrier are separate in the frequency direction, synchronization cannot be established, and therefore it is difficult to use a carrier of the additional carrier type for SCell.

Consequently, when the system is operated primarily around mobile terminal apparatuses that do not support the additional carrier type, it is difficult to introduce the additional carrier type. That is to say, in the situation where there are many existing (Rel-10 and earlier versions) mobile terminal apparatuses in the system, an extended carrier where the additional carrier type is set cannot be used effectively. So, the present inventors have arrived at the present invention in order to make it possible to use frequency resources effectively even when a plurality of mobile terminal apparatuses of varying capabilities coexist in the system. That is to say, a gist of the present invention is to set subframes of the legacy carrier type and subframes of the additional carrier type in an extended carrier that is additionally allocated to the basic carrier. By this means, it is possible to allow existing mobile terminal apparatuses to utilize the extended carrier, and use frequency resources effectively.

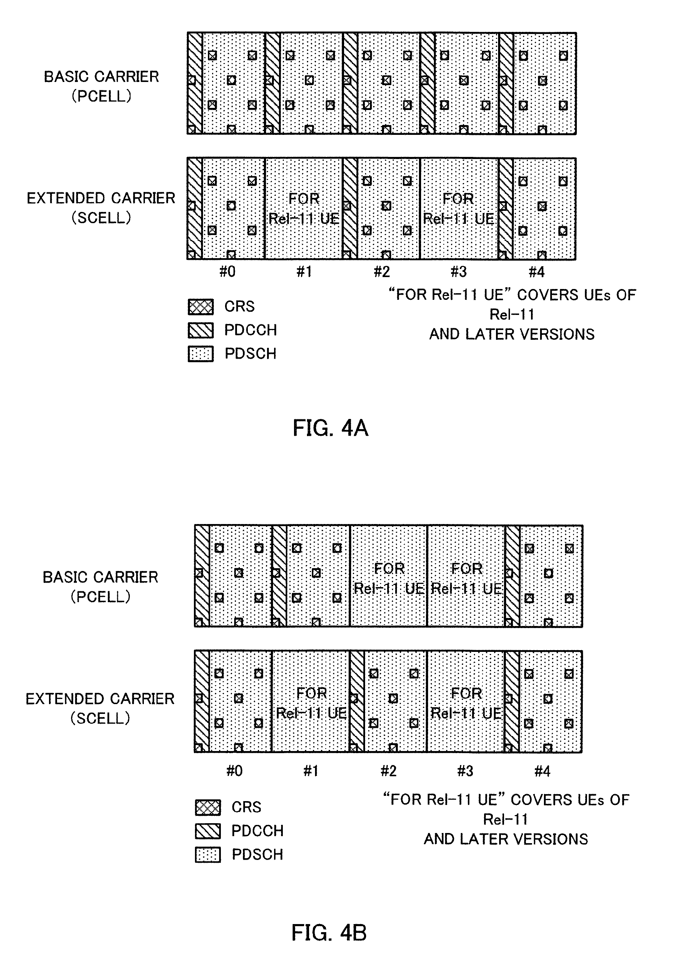

The subframe configuration according to the present embodiment will be described with reference to FIG. 4. FIG. 4 provides diagrams to explain subframe configurations according to the present embodiment.

As shown in FIG. 4A, subframes of the legacy carrier type are set in the basic carrier, and subframes of the legacy carrier type and the additional carrier type are set in the extended carrier. In the extended carrier, not only subframes of the additional carrier type, but also subframes of the legacy carrier type are partly set, so that it is possible to allow Rel-10 mobile terminal apparatuses to use the extended carrier as SCell in carrier aggregation. Also, since subframes of the legacy carrier type, which enable CRS measurement, are set in the extended carrier, it is possible to use the extended carrier as PCell in carrier aggregation.

To be more specific, in subframes #0, #2 and #4, in which the basic carrier and the extended carrier are set in the legacy carrier type, Rel-10 mobile terminal apparatuses and new (Rel-11 and later versions) mobile terminal apparatuses are able to communicate using carrier aggregation. In subframes #1 and #3, in which the extended carrier are set to be the additional carrier type, new mobile terminal apparatuses to support the additional carrier type are able to communicate using carrier aggregation. Note that, in subframes #1 and #3, even a Rel-10 mobile terminal apparatus is able to communicate without using carrier aggregation. In this case, a scheduling section, which will be described later, controls the Rel-10 mobile terminal apparatus not to apply carrier aggregation to subframes #1 and #3.

In this way, with the subframe configuration according to the present embodiment, it is possible to allow existing mobile terminal apparatuses to use an extended carrier as SCell in carrier aggregation. In this case, the scheduling section does not allocate existing mobile terminal apparatuses to subframes of the additional carrier type. By means of this configuration, it is possible to make effective use of frequency resources of the extended carrier, even in the situation where there are many existing mobile terminal apparatuses in the system, and introduce the additional carrier type in the system.

Also, as shown in FIG. 4B, subframes of the legacy carrier type and the additional carrier type may also be set in the basic carrier. In this case, by setting subframes of the legacy carrier type in the basic carrier and in the extended carrier, it is possible to allow a Rel-10 mobile terminal apparatus to use the extended carrier as SCell in carrier aggregation. Also, since subframes of the legacy carrier type are set in the extended carrier, it is possible to use the extended carrier as PCell in carrier aggregation.

To be more specific, in subframes #0 and #4, in which the basic carrier and the extended carrier are set to be the legacy carrier type, Rel-10 mobile terminal apparatuses and new (Rel-11 and later versions) mobile terminal apparatuses are able to communicate using carrier aggregation. In subframe #1, in which the extended carrier is set to be the additional carrier type, a new mobile terminal apparatus to support the additional carrier type is able to communicate using carrier aggregation. Note that, in subframe #1, even a Rel-10 mobile terminal apparatus is also able to communicate without using carrier aggregation. In this case, the scheduling section controls the Rel-10 mobile terminal apparatus not to apply carrier aggregation to subframe #1.

In subframes #2 and #3, in which the additional carrier type is set in the basic carrier, communication is possible using carrier aggregation in the situation in which communication by new mobile terminal apparatuses is established. In this case, the new mobile terminal apparatuses are unable to establish communication in the subframes of the additional carrier type, where broadcast information is made not subject to transmission, and therefore establish communication with the base station apparatus by, for example, earlier subframes. By this means, the new mobile terminal apparatuses are able to communicate using carrier aggregation, even when subframes of the additional carrier type are set in the basic carrier (PCell).

Now, according to the additional carrier type, unlike the legacy carrier type, user data is transmitted in downlink control channel and CRS resources, so that it is necessary to report the carrier types of subframes to mobile terminal apparatuses. This is because the base station apparatus performs rate matching separately between the legacy carrier type and the additional carrier type, and a mobile terminal apparatus has to perform de-rate matching by recognizing the carrier types. Unless a mobile terminal apparatus does not recognize the carrier types, the demodulation process is not applied to adequate resources, and the accuracy of demodulation is therefore deteriorated.

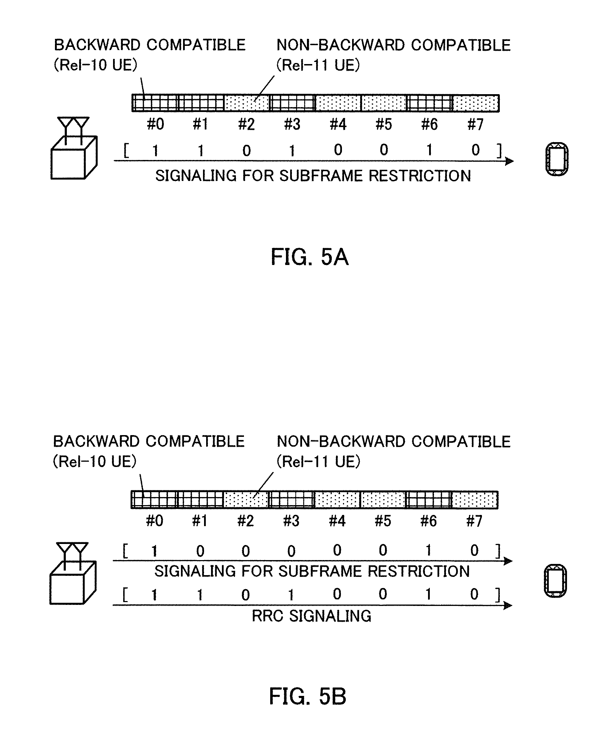

Here, the method of signaling the carrier type of each subframe will be described. FIG. 5 provides diagrams to explain methods of signaling the carrier type of each subframe. Note that, in the following description, an extended carrier will be shown as an example, but the same applies to the basic carrier as well. Also, when only subframes of the legacy carrier type are set in the basic carrier, signaling of the carrier type is not necessary.

The first signaling method will be described with reference to FIG. 5A. The first signaling method is a method of convoluting and reporting reference signal measurement positions and the carrier type of each subframe using signaling for subframe restriction. Subframe restriction refers to the method of limiting to part of subframes to measure the reference signals. In Rel-10, this is defined only with respect to PCell. When this signaling is defined in SCell in Rel-11 as well, according to this first signaling method, subframes of the legacy carrier type are made reference signal measurement positions, to allow a mobile terminal apparatus to recognize the reference signal measurement positions by reporting the carrier type of each subframe. For example, as the carrier type of each subframe, 8-bit bitmap information [11010010] is reported in association with subframes #0 to #7, by signaling for subframe restriction. By this means, reference signals are measured in subframes #0, #1, #3 and #6 of the legacy carrier type. In this way, it is possible to reduce the amount of signaling by convoluting and reporting reference signal measurement positions and the carrier type of each subframe.

The second signaling method will be described with reference to FIG. 5B. The second signaling method is the method of reporting reference signal measurement positions by signaling for subframe restriction, and, apart from this, reporting the carrier type of each subframe by higher layer signaling (RRC signaling). For example, 8-bit bitmap information [10000010] is reported, as reference signal measurement positions, in association with subframes #0 to #7, by signaling for subframe restriction. Also, 8-bit bitmap information [11010010] is reported as the carrier type of each subframe, by higher layer signaling, in association with subframes #0 to #7. In this way, by using higher layer signaling, it is possible to report the carrier type of each subframe easily.

By reporting the carrier type of each subframe by the first and second signaling methods, a mobile terminal apparatus recognizes the carrier types and performs the demodulation process, so that the accuracy of downlink data demodulation does not deteriorate. Note that, although two signaling methods have been described with reference to FIG. 5, these signaling methods are by no means limiting. The signaling method may be any method as long as the carrier type of each subframe can be reported.

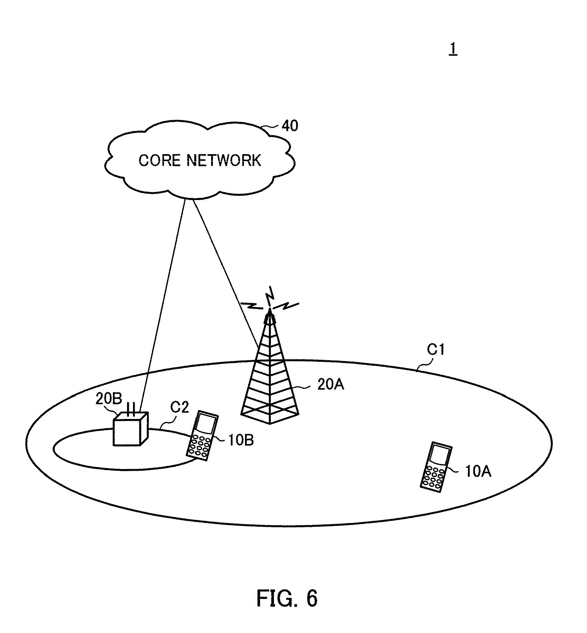

Now, a radio communication system according to an embodiment of the present invention will be described in detail. FIG. 6 is a diagram to explain a system configuration of a radio communication system according to the present embodiment. Note that the radio communication system shown in FIG. 6 is a system to accommodate, for example, the LTE system or its successor system. In this radio communication system, carrier aggregation, which makes a plurality of fundamental frequency blocks as one, where the system band of the LTE system is one unit, is used. Also, this radio communication system may be referred to as IMT-Advanced or may be referred to as 4G.

As shown in FIG. 6, the radio communication system 1 is a HetNet, and a layered network is constructed with a macro cell C1 and a pico cell C2. A mobile terminal apparatus 10A is connected to the base station apparatus 20A of the macro cell C1. A mobile terminal apparatus 10B is connected to the base station apparatus 20B of the pico cell C2. Also, the base station apparatuses 20A and 20B are each connected with a higher station apparatus, which is not shown, and are connected with a core network 40 via the higher station apparatus. The higher station apparatus includes, for example, an access gateway apparatus, a radio network controller (RNC), a mobility management entity (MME) and so on, but is by no means limited to these.

Also, the base station apparatuses 20A and 20B have the same configurations in principle parts, and therefore will be described simply as "base station apparatus 20" in the following description. Similarly, the mobile terminal apparatuses 10A and 10B have the same configurations in principle parts, and therefore will be described simply as "mobile terminal apparatus 10" in the following description. Although the mobile terminal apparatuses 10 include existing (Rel-10 and earlier versions) mobile terminal apparatuses and new (Rel-11 and later versions) mobile terminal apparatuses, the following description will be given simply with respect to "mobile terminal apparatus," unless specified otherwise. Also, although it is each mobile terminal apparatus 10 that performs radio communication with the base station apparatus 20, for ease of explanation, more generally, user apparatuses (UEs: User Equipment) including mobile terminal apparatuses and fixed terminal apparatuses may be used.

In the radio communication system 1, as radio access schemes, OFDMA (Orthogonal Frequency Division Multiple Access) is adopted on the downlink, and SC-FDMA (Single-Carrier Frequency Division Multiple Access) is adopted on the uplink, but the uplink radio access scheme is by no means limited to this. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one resource block or continuous resource blocks, and allowing a plurality of terminals to use mutually different bands.

Here, communication channels will be described. The downlink communication channels include a PDSCH (Physical Downlink Shared Channel), which is used by each mobile terminal apparatus 10 on a shared basis, and downlink L1/L2 control channels (PDCCH, PCFICH, PHICH). User data and higher control information are transmitted by the PDSCH. Scheduling information for the PDSCH and the PUSCH is transmitted by the PDCCH (Physical Downlink Control Channel). The number of OFDM symbols to be used for the PDCCH is transmitted by the PCFICH (Physical Control Format Indicator Channel). HARQ ACK/NACK in response to the PUSCH is transmitted by the PHICH (Physical Hybrid-ARQ Indicator Channel).

The uplink communication channels include a PUSCH (Physical Uplink Shared Channel), which is an uplink data channel used by each mobile terminal apparatus on a shared basis, and a PUCCH (Physical Uplink Control Channel), which is an uplink control channel. By means of this PUSCH, user data and higher control information are transmitted. Also, downlink radio quality information (CQI: Channel Quality Indicator), ACK/NACK and so on are transmitted by the PUCCH.

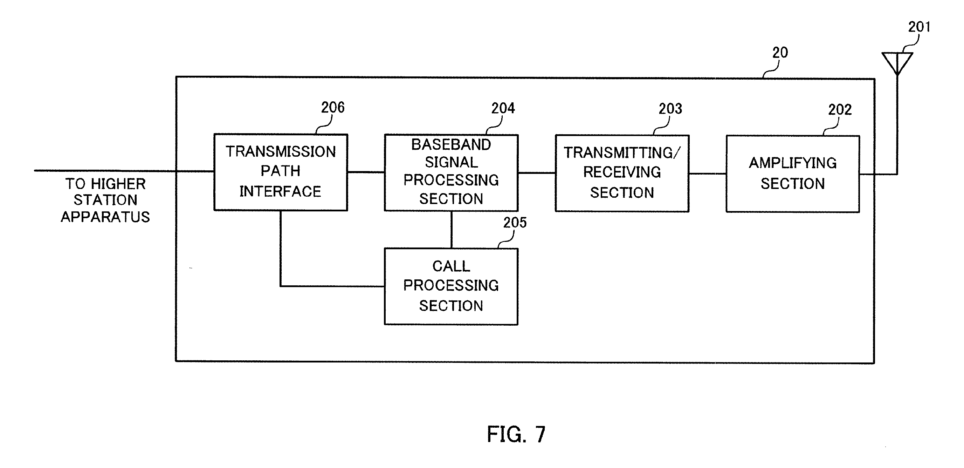

Referring to FIG. 7, an overall configuration of a base station apparatus according to the present embodiment will be described. The base station apparatus 20 has a transmitting/receiving antenna 201 for MIMO transmission, an amplifying section 202, a transmitting/receiving section (transmitting section) 203, a baseband signal processing section 204, a call processing section 205, and a transmission path interface 206.

User data that is transmitted from the base station apparatus 20 to the mobile terminal apparatus 10 on the downlink is input in the baseband signal processing section 204, through the transmission path interface 206, from the higher station apparatus which is positioned above the base station apparatus 20.

The baseband signal processing section 204 performs, for example, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process, and a precoding process. Furthermore, as for the signal of the downlink control channel, transmission processes such as channel coding and an inverse fast Fourier transform are performed, and the result is transferred to the transmitting/receiving section 203.

Also, the baseband signal processing section 204 reports control information for allowing each mobile terminal apparatus 10 to communicate with the base station apparatus 20, to the mobile terminal apparatuses 10 connected to the same cell, by a broadcast channel. Information for allowing communication in the cell includes, for example, the uplink or downlink system bandwidth, identification information of a root sequence (root sequence index) for generating random access preamble signals in the PRACH (Physical Random Access Channel), and so on.

A baseband signal that is output from the baseband signal processing section 204 is subjected to a frequency conversion process in the transmitting/receiving section 203 and converted into a radio frequency band, and, after that, amplified in the amplifying section 202 and transmitted from the transmitting/receiving antenna 201.

Meanwhile, as for data to be transmitted from the mobile terminal apparatus 10 to the base station apparatus 20 on the uplink, the radio frequency signal received in the transmitting/receiving antenna 201 is amplified in the amplifying section 102, converted into a baseband signal by frequency conversion in the transmitting/receiving section 203, and input in the baseband signal processing section 204.

The baseband signal processing section 204 applies, to the user data included in the baseband signal received as input, an FFT process, an IDFT process, error correction decoding, a MAC retransmission control receiving process, and RLC layer and PDCP layer receiving processes. The baseband signal is transferred to the higher station apparatus via the transmission path interface 206.

The call processing section 205 performs call processing such as setting up and releasing communication channels, manages the state of the base station apparatus 20 and manages the radio resources.

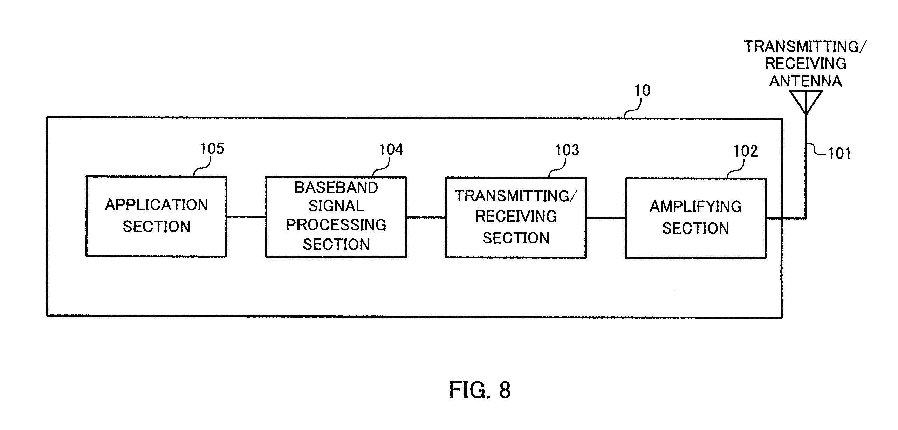

Next, referring to FIG. 8, an overall configuration of a mobile terminal apparatus according to the present embodiment will be described. The mobile terminal apparatus 10 has a transmitting/receiving antenna 101, an amplifying section 102, a transmitting/receiving section 103 (receiving section), a baseband signal processing section 104, and an application section 105.

As for downlink data, a radio frequency signal that is received in the transmitting/receiving antennas 101 is amplified in the amplifying section 102, and subjected to frequency conversion and converted into a baseband signal in the transmitting/receiving section 103. This baseband signal is subjected to receiving processes such as an FFT process, error correction decoding and retransmission control, in the baseband signal processing section 104. In this downlink data, downlink user data is transferred to the application section 105. The application section 105 performs processes related to higher layers above the physical layer and the MAC layer. Also, in the downlink data, broadcast information is also transferred to the application section 105.

Meanwhile, uplink user data is input from the application section 105 to the baseband signal processing section 104. The baseband signal processing section 104 performs a retransmission control (HARQ (Hybrid ARQ)) transmission process, channel coding, precoding, a DFT process, and an IFFT process, and transfers the result to the transmitting/receiving section 103. A baseband signal that is output from the baseband signal processing section 104 is subjected to a frequency conversion process and converted into a radio frequency band, and, after that, amplified in the amplifying section 102 and transmitted from the transmitting/receiving antenna 101.

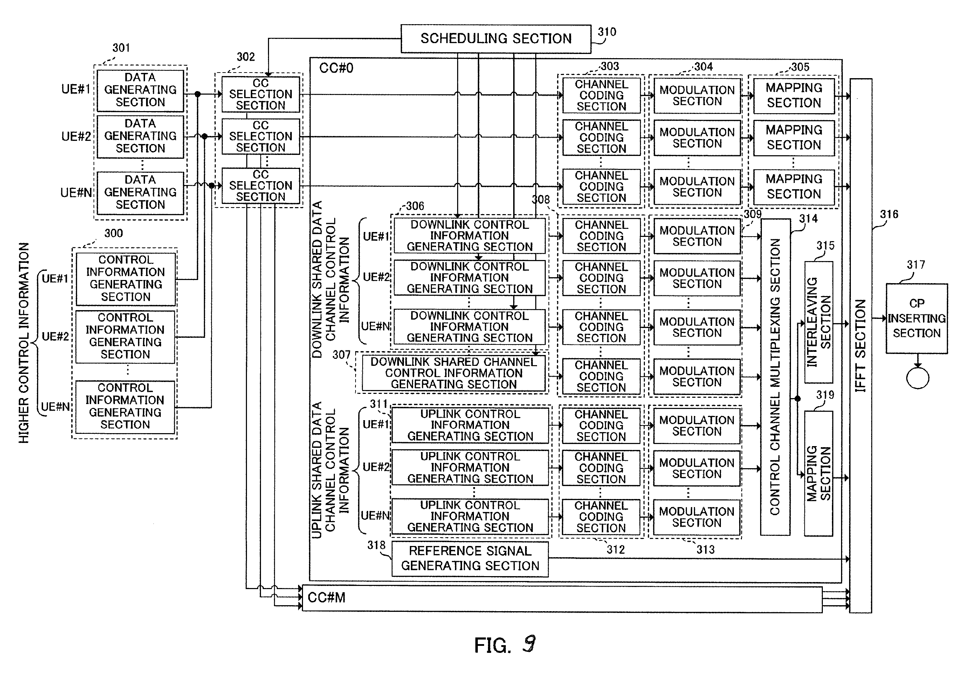

FIG. 9 is a functional block diagram of a baseband signal processing section 204 provided in the base station apparatus 20 according to the present embodiment and part of higher layers, and primarily illustrates the functional blocks for transmission processes in the baseband signal processing section 204. Transmission data for the mobile terminal apparatus 10 under the base station apparatus 20 is transferred from the higher station apparatus to the base station apparatus 20.

Control information generating sections 300 generate higher control information for performing higher layer signaling (for example, RRC signaling), on a per user basis. The higher control information may include signaling for reporting the carrier type of each subframe.

Data generating sections 301 output transmission data transferred from the higher station apparatus as user data, for each user. Component carrier selection sections 302 select, for each user, component carriers to use for radio communication with the mobile terminal apparatus 10. FIG. 9 shows an example of a base station configuration which can support the maximum number of component carriers M (CC #0 to CC #M). Component carriers CC #0 to CC #M include the basic carrier and an extended carrier that is additionally allocated to the basic carrier.

A scheduling section 310 (setting section, reporting section) controls assignment of component carriers to a serving mobile terminal apparatus 10, according to overall communication quality of the system band. When executing cross-carrier scheduling, the scheduling section 310 designates the carriers to use to report control information to downlink control information generating sections 306.

Also, the scheduling section 310 sets the carrier type of component carriers. The scheduling section 310 sets the carrier type to assign to the extended carrier according to the number of existing (Rel-10 and earlier versions) mobile terminal apparatuses that remain in the system. For example, in the situation where there are many existing (Rel-10 and earlier versions) mobile terminal apparatuses 10 in the system, more subframes of the legacy carrier type are set in the extended carrier than subframes of the additional carrier type. Also, in the situation where there are few existing mobile terminal apparatuses 10 in the system, more subframes of the additional carrier type are set in the extended carrier than subframes of the legacy carrier type.

In this case, the scheduling section 310 acquires capability information (model information) from the mobile terminal apparatuses 10 in the system, and sets the carrier type to assign to the extended carrier. Note that the scheduling section 310 may also set the carrier type on a regular basis according to the number of subscribing existing mobile terminal apparatuses 10, instead of acquiring capability information from the mobile terminal apparatuses 10 in the system. Also, the scheduling section 310 may set subframes of the additional carrier type in the basic carrier as well, when the number of existing mobile terminal apparatuses 10 in the system decreases significantly.

Also, the scheduling section 310 controls signaling bits depending on the carrier type. For example, signaling bits may be controlled such that "1" is set with respect to subframes of the legacy carrier type and "0" is set with respect to subframes of the additional carrier type. Note that signaling information of the carrier type of each carrier is generated in the control information generating sections 300 when reported by higher control information, generated in the downlink control information generating sections 306 (which will be described later) when reported by downlink control information, and generated in downlink shared channel control information generating sections 307 (which will be described later) when reported by downlink shared channel control information.

The scheduling section 310 controls allocation of resources in each carrier, and schedules existing mobile terminal apparatuses 10 and new mobile terminal apparatuses 10 separately. Also, the scheduling section 310 takes into account the carrier types upon resource allocation for the uplink/downlink shared control channels. That is to say, as shown in FIG. 4, existing mobile terminal apparatuses 10 are not allocated to subframes of the additional carrier type. Also, the scheduling section 310 receives as input transmission data and retransmission commands from the higher station apparatus, and also receives as input the channel estimation values and resource block CQIs from the receiving section having measured an uplink signal.

The scheduling section 310 schedules the uplink and downlink control information and the uplink and downlink shared channel signals with reference to the retransmission commands, channel estimation values and CQIs that have been received as input. A propagation path in mobile communication varies differently per frequency, due to frequency selective fading. So, the scheduling section 310 designates resource blocks (mapping positions) of good communication quality, on a per subframe basis, for user data for each mobile terminal apparatus 10 (which is referred to as adaptive frequency scheduling). In adaptive frequency scheduling, for each resource block, a mobile terminal apparatus 10 of good propagation path quality is selected. Consequently, the scheduling section 310 designates resource blocks (mapping positions), using the CQI of each resource block, fed back from each mobile terminal apparatus 10. Also, the MCS (coding rate and modulation scheme) that fulfills a predetermined block error rate with the assigned resource blocks is determined.

Also, the scheduling section 310 is also able to command allocating user data to resources secured for the PDCCH and the CRS, for subframes of the additional carrier type. Also, when transmitting control information by the FDM-type PDCCH, the scheduling section 310 designates resource blocks (mapping positions) of good communication quality with respect to the FDM-type PDCCH. Consequently, the scheduling section 310 designates resource blocks (mapping positions), using the CQI of each resource block, fed back from each mobile terminal apparatus 10. Note that the FDM-type PDCCH mapping positions are included in the above-described higher control information and reported to the mobile terminal apparatuses 10.

The baseband signal processing section 204 has channel coding sections 303, modulation sections 304, and mapping sections 305. The channel coding sections 303 perform channel coding of the downlink shared data channel (PDSCH), which is formed with user data (which may include part of higher control signals) output from the data generating sections 301, for each user. The modulation sections 304 modulate user data having been subjected to channel coding, for each user. The mapping sections 305 map the modulated user data to radio resources.

Also, the baseband signal processing section 204 has downlink control information generating sections 306 that generate downlink shared data channel control information, which is user-specific downlink control information, and downlink shared channel control information generating sections 307 that generate downlink shared control channel control information, which is user-common downlink control information. The downlink control information generating sections 306 generate downlink control information (DCI) for controlling the downlink shared data channel (PDSCH), as a downlink shared data channel control information. The downlink control information generating sections 306 generate control information in accordance with the capabilities (models) of the mobile terminal apparatuses 10.

The downlink control information generating sections 306 may make downlink control information not subject to transmission, with respect to subframes of the additional carrier type. In this case, using the above FDM-type PDCCH and cross-carrier scheduling, control information for subframes of the additional carrier type is reported. When cross-carrier scheduling is executed, a CIF (Carrier Indicator Field) is added to the downlink control information of the basic carrier (PCell). By this means, for example, a mobile terminal apparatus is able to receive downlink control information of the extended carrier of the additional carrier type, from the basic carrier of the legacy carrier type.

Also, the downlink control information generating sections 306 are able to make HARQ ACK/NACK not subject to transmission for subframes of the additional carrier type. In this case, retransmission control is executed using downlink control information. Furthermore, the downlink control information generating sections 306 are able to make the number of OFDM symbols for the PDCCH not subject to transmission for subframes of the additional carrier type. In this case, the number of OFDM symbols is reported by higher layer signaling.

The baseband signal processing section 204 has channel coding sections 308 and modulation sections 309. The channel coding sections 308 perform channel coding of control information generated in the downlink control information generating sections 306 and the downlink shared channel control information generating sections 307, for each user. The modulation sections 309 modulate the downlink control information having been subjected to channel coding.

Also, the baseband signal processing section 204 has uplink control information generating sections 311, channel coding sections 312, and modulation sections 313. The uplink control information generating sections 311 generate uplink shared data channel control information for controlling the uplink shared data channel (PUSCH), for each user. The uplink control information generating sections 311 generate control information depending on the capabilities (models) of the mobile terminal apparatuses 10. The channel coding sections 312 perform channel coding of uplink shared data channel control information, for each user. The modulation sections 313 modulate uplink shared data channel control information having been subjected to channel coding, for each user.

The control information that is modulated for each user in the above modulation sections 309 and 313 is multiplexed in the control channel multiplexing section 314. Downlink control information for the PDCCH is multiplexed over the top three OFDM symbols of a subframe and is interleaved in the interleaving section 315. Note that, when control information is transmitted by the FDM-type PDCCH in subframes of the additional carrier type, downlink control information is multiplexed over the data region of the subframes and mapped in the mapping section 319.

The reference signal generating section 318 generates the CRS, which is used for various purposes such as channel estimation, symbol synchronization, CQI measurement, mobility measurement and so on. Also, the reference signal generating section 318 generates the DM-RS, which is a user-specific downlink demodulation reference signal, and the CSI-RS, which is for dedicated use of CSI measurement. The DM-RS is not only used to demodulate user data but is also used to demodulate downlink control information that is transmitted by the enhanced PDCCH.

The reference signal generating section 318 is also able to make the CRS not subject to transmission for subframes of the additional carrier type. In this case, the DM-RS is used for user data demodulation and the CSI-RS is used for CQI measurement.

The IFFT section 316 receives control signals as input from the interleaving section 315 and the mapping section 319, receives user data as input from the mapping sections 305, and receives reference signals as input from the reference signal generating section 318. The IFFT section 316 converts a downlink channel signal from a frequency domain signal into a time sequence signal, by performing an inverse fast Fourier transform. A cyclic prefix inserting section 317 inserts cyclic prefixes in the time sequence signal of the downlink channel signal. Note that a cyclic prefix functions as a guard interval for cancelling the differences in multipath propagation delay. The transmission data, to which cyclic prefixes have been added, is transmitted to the transmitting/receiving section 203.

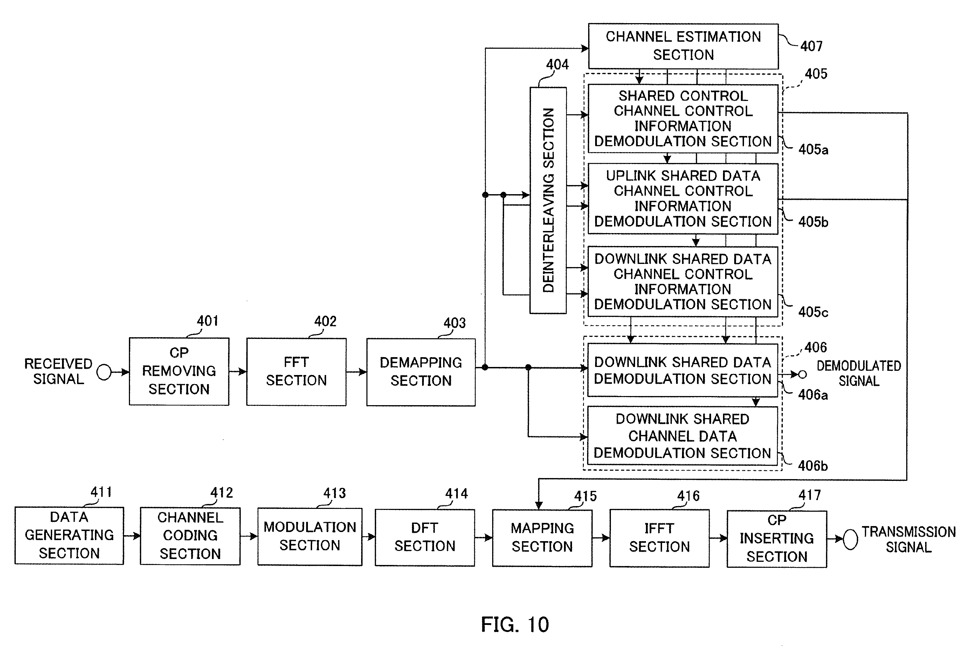

FIG. 10 is a functional block diagram of the baseband signal processing section 104 provided in the mobile terminal apparatus 10. Here, the functional blocks of a new mobile terminal apparatus of Rel-11 and later versions will be described. First, the downlink configuration of the mobile terminal apparatus 10 will be described.

The baseband signal processing section 104 has, as functional blocks of the receiving processing system, a CP removing section 401, an FFT section 402, a demapping section 403, a deinterleaving section 404, a control information demodulation section 405, a data demodulation section 406, and a channel estimation section 407. The CP removing section 401 removes the cyclic prefixes, which are guard intervals, from a received signal received in the transmitting/receiving section 103. The FFT section 402 performs a fast Fourier transform (FFT) of the received signal (OFDM signal), from which the cyclic prefixes have been removed, and converts a waveform of time components into a signal of frequency components.

The demapping section 403 demaps the received signal and extracts a plurality of pieces of control information, user data, and higher control information, from the received signal. The deinterleaving section 404 executes rearrangement in the opposite order to the interleaving applied on the transmitting side, and places the control information back in the original order. Note that, when control information is reported by the FDM-type PDCCH, the control information is input in the control information demodulation section 405 without involving the deinterleaving section 404.

The control information demodulation section 405 has a shared control channel control information demodulation section 405a that demodulates shared control channel control information, an uplink shared data channel control information demodulation section 405b that demodulates uplink shared data channel control information, and a downlink shared data channel control information demodulation section 405c that demodulates downlink shared data channel control information. The shared control channel control information and the uplink shared data channel control information are input in the mapping section 415 and used to control the uplink shared data channel (PUSCH). The downlink shared data channel control information is input in the downlink shared data demodulation section 406a and used to control the downlink shared data channel (PDSCH).

The data demodulation section 406 includes a downlink shared data demodulation section 406a that demodulates the user data and higher control signals, and a downlink shared channel data demodulation section 406b that demodulates downlink shared channel data. The downlink shared data demodulation section 406a acquires user data and higher control information based on downlink shared data channel control information input from the downlink shared data channel control information demodulation section 405c. In this case, the data demodulating section 406 performs de-rate matching by switching the rate matching pattern depending on the carrier type of each subframe. By this means, for subframes of the additional carrier type, a demodulation process is executed adequately, taking into account the user data that is allocated to resources for the CRS and the PDCCH. Note that the carrier type of each subframe is reported by, for example, higher control information, downlink shared data channel control information, and shared control channel control information.

The channel estimation section 407 performs channel estimation using user-specific reference signals (DM-RSs) or cell-specific reference signals (CRSs). When subframes of the legacy carrier type are demodulated, channel estimation is performed using CRSs or DM-RSs. On the other hand, when subframes of the additional carrier type are demodulated, channel estimation is performed using DM-RSs. The channel estimation section 407 outputs the estimation results to the shared control channel control information demodulation section 405a, the uplink shared data channel control information demodulation section 405b, the downlink shared data channel control information demodulation section 405c and the downlink shared data demodulation section 406a. In these demodulation sections, the demodulation process is performed using the estimation results.

The baseband signal processing section 104 has, as functional blocks of the transmitting processing system, a data generating section 411, a channel coding section 412, a modulation section 413, a DFT section 414, a mapping section 415, an IFFT section 416, and a CP inserting section 417. The data generating section 411 generates transmission data from bit data that is received as input from the application section 105. The channel coding section 412 applies channel coding processes such as error correction to the transmission data, and the modulation section 413 modulates the transmission data having been subjected to channel coding by QPSK and so on.

The DFT section 414 performs a discrete Fourier transform on the modulated transmission data. The mapping section 415 maps the frequency components of the data symbols after the DFT, to subcarrier positions designated by the base station apparatus 20. The IFFT section 416 converts the input data to match the system band into time sequence data by performing an inverse fast Fourier transform, and the CP inserting section 417 inserts cyclic prefixes in the time sequence data in data units.

Next, allocation of subframes of the additional carrier type to the extended carrier in the base station apparatus 20 and signaling of each carrier type will be described. Here, an example where subframes of the legacy carrier type are allocated to the basic carrier and subframes of the legacy carrier type and the additional carrier type are allocated to the extended carrier will be described. Also, assume that Rel-10 and Rel-11 mobile terminal apparatuses coexist.

The base station apparatus 20 acquires capability information from the mobile terminal apparatuses in the system. The scheduling section 310 sets the carrier type to assign to the extended carrier depending on the number of Rel-10 mobile terminal apparatuses 10 that remain in the system. When the number of Rel-10 mobile terminal apparatuses 10 is large, the scheduling section 310 makes the proportion of subframes of the legacy carrier type greater than the proportion of subframes of the additional carrier type. Also, when the number of Rel-10 mobile terminal apparatuses 10 is small, the scheduling section 310 makes the proportion of subframes of the legacy carrier type greater than the proportion of subframes of the additional carrier type.

Also, the scheduling section 310 controls the signaling of carrier types, in order to report the carrier types, which are determined on a per subframe basis, to the mobile terminal apparatuses 10. The signaling information of the carrier types is 8-bit bitmap information, as shown in FIG. 5, and is generated in, for example, the control information generating sections 300, the downlink control information generating sections 306, and the downlink shared channel control information generating section 307. For the extended carrier, the scheduling section 310 allocates mobile terminal apparatuses 10 of Rel-10 and Rel-11 to subframes of the legacy carrier type, and allocates mobile terminal apparatuses 10 of Rel-11 to subframes of the additional carrier type.

The downlink control information generating sections 306 of the basic carrier generate downlink control information (DCI) for each user. The downlink control information generating sections 306 of the extended carrier switch the process depending on the carrier type of every subframe set in the scheduling section 310. That is to say, the downlink control information generating sections 306 generate downlink control information for each user in subframes of the legacy carrier type, and does not generate downlink control information in subframes of the additional carrier type. In this case, downlink control information of subframes of the additional carrier type is reported using the FDM-type PDCCH or cross-carrier scheduling.

The reference signal generating section 318 of the basic carrier generates the CRS, DM-RS, and CSI-RS. The reference signal generating section 318 of the extended carrier switches the process depending on the carrier type of every subframe set in the scheduling section 310. That is to say, the reference signal generating section 318 generates the CRS in subframes of the legacy carrier type, and does not generate the CRS in subframes of the additional carrier type. In this case, the mobile terminal apparatus 10 performs demodulation, CQI measurement and so on using the DM-RS and CSI-RS.

A Rel-11 mobile terminal apparatus 10 recognizes the carrier type of each subframe of the extended carrier, according to the signaling of carrier types from the base station apparatus 20. As for the basic carrier, the data demodulating section 406 of the mobile terminal apparatus 10 performs de-rate matching in accordance with the rate matching pattern of the legacy carrier type. As for the extended carrier, the data demodulating section 406 switches the rate matching pattern according to the carrier type, and performs de-rate matching. By this means, for subframes of the additional carrier type, the demodulation process is executed adequately, taking into account the user data that is allocated to resources for the CRS and the PDCCH.

As described above, with the communication system according to the present embodiment, not only subframes of the additional carrier type, supported by mobile terminal apparatuses 10 of Rel-11 and later versions, but also subframes of the legacy carrier type, supported by mobile terminal apparatuses 10 of Rel-10, are set in the extended carrier. Consequently, it is possible to allow Rel-10 mobile terminal apparatuses 10 to utilize the extended carrier, and use frequency resources effectively even in the situation where several types of mobile terminal apparatuses 10 of varying capabilities coexist.

The present invention is by no means limited to the above embodiments and can be implemented in various modifications. For example, without departing from the scope of the present invention, it is possible to adequately change the number of carriers in the above description, the bandwidth of carriers, the signaling method, the type of the additional carrier type, the number of processing sections, the order of processing steps, and implement the present invention. Besides, the present invention can be implemented with various changes, without departing from the scope of the present invention.

Also, although new (Rel-11 and later versions) mobile terminal apparatuses and existing (Rel-10 and earlier versions) mobile terminal apparatuses have been described as examples with the present embodiment, these configurations are by no means limiting. For example, even if new (Rel-11 and later versions) mobile terminal apparatuses are provided, if these are a mobile terminal apparatus that does not support the additional carrier type and a mobile terminal apparatus that supports the additional carrier type, the present system may be adopted. In this case, the legacy carrier type is not limited to the above content and has only to be a carrier type to be supported by a plurality of models of mobile terminal apparatuses of Rel-11 and later versions. Also, the additional carrier type is not limited to the above content either, and has only to be a carrier type to be supported only by part of mobile terminal apparatuses of Rel-11 and later versions.

The disclosure of Japanese Patent Application No. 2011-177603, filed on August 15, 2011, including the specification, drawings and abstract, is incorporated herein by reference in its entirety.

## Claims

1. A communication system in which a mobile terminal apparatus and a base station apparatus communicate using a basic carrier and an extended carrier that is additionally allocated to the basic carrier, wherein:
the base station apparatus comprises:
a setting section that sets, in the extended carrier, a subframe of a first carrier type which can be received in each of a plurality of mobile terminal apparatuses of varying capabilities and a subframe of a second carrier type which can be received in part of the plurality of mobile terminal apparatuses; and
a transmission section that transmits the basic carrier and the extended carrier to the mobile terminal apparatus; and
the mobile terminal apparatus comprises:
a receiving section that receives the basic carrier and the extended carrier from the base station apparatus.

2. The communication system according to claim 1, wherein the setting section sets, in the basic carrier, the subframe of the first carrier type and the subframe of the second carrier type.

3. The communication system according to one of claim 1 and claim 2, wherein the setting section disallows allocating the subframe of the second carrier type, to a mobile terminal apparatus which can receive only the subframe of the first carrier type.

4. The communication system according to claim 1, wherein the base station apparatus further comprises a reporting section that reports a carrier type of each subframe.

5. The communication system according to claim 4, wherein the reporting section reports the carrier type of each subframe using bitmap information which indicates a subframe in which the mobile terminal apparatus is allowed to measure a reference signal.

6. A base station apparatus that communicates with a mobile terminal apparatus using a basic carrier and an extended carrier that is additionally allocated to the basic carrier, the base station apparatus comprising:
a setting section that sets, in the extended carrier, a subframe of a first carrier type which can be received in each of a plurality of mobile terminal apparatuses of varying capabilities and a subframe of a second carrier type which can be received in part of the plurality of mobile terminal apparatuses; and
a transmission section that transmits the basic carrier and the extended carrier to the mobile terminal apparatus.

7. A mobile terminal apparatus that communicates with a base station apparatus using a basic carrier and an extended carrier that is additionally allocated to the basic carrier, the mobile terminal apparatus comprising:
a receiving section that receives, from the base station apparatus, the extended carrier, in which a subframe of a first carrier type which can be received in each of a plurality of mobile terminal apparatuses of varying capabilities and a subframe of a second carrier type which can be received in part of the plurality of mobile terminal apparatuses, are set.

8. A communication method whereby a mobile terminal apparatus and a base station apparatus communicate using a basic carrier and an extended carrier that is additionally allocated to the basic carrier, the communication method comprising the steps of:
in the base station apparatus:
setting, in the extended carrier, a subframe of a first carrier type which can be received in each of a plurality of mobile terminal apparatuses of varying capabilities and a subframe of a second carrier type which can be received in part of the plurality of mobile terminal apparatuses; and
transmitting the basic carrier and the extended carrier to the mobile terminal apparatus; and
in the mobile terminal apparatus:
receiving the basic carrier and the extended carrier from the base station apparatus.
